# EUROPEAN PATENT APPLICATION

(11) **EP 2 337 295 A1**
(43) Date of publication of application: **22.06.2011**
(21) Application number: 09812639.4
(22) Date of filing: 27.08.2009
(51) Int. Cl.: H04L 27/26

(54) **METHOD, APPARATUS AND SYSTEM FOR GIVING SIGNAL ERROR FEEDBACK IN MULTICARRIER COMMUNICATION SYSTEMS**

(30) Priority: 09.09.2008 CN 200810211906
(71) Applicant: Huawei Technologies Co., Ltd., Longgang District, Shenzhen Guangdong 518129 (CN)
(72) Inventor: FANG, Liming, Shenzhen Guangdong 518129 (CN); CENDRILLON, Raphael, Shenzhen Guangdong 518129 (CN); HUNG, Chin, Shenzhen Guangdong 518129 (CN)
(74) Representative: Kreuz, Georg Maria
(86) International application number: PCT/CN2009/073566
(87) International publication number: WO 2010/028573

(57) **Abstract**

A method, apparatus and system for returning a signal error in a multi-carrier communication system is provided, which relate to the field of communication technology, and solve the problem in the prior art that a signal error cannot be promptly returned in a limited feedback channel bandwidth. The method includes the following steps: firstly a specific sub-carrier interval is determined, and a signal error is returned by a client at the specific sub-carrier intervals. In this way, it is unnecessary to return a signal error in each sub-carrier, the volume of feedback data is reduced and the feedback channel is not blocked, so as to realize the objective of returning a signal error promptly. The method, apparatus and system for returning a signal error in a multi-carrier communication system is applied to multi-carrier communication systems, including xDSL communication systems and various wireless communication systems, such as mobile communication systems.

## Description

This application claims priority to Chinese Patent Application No. 200810211906.2, filed with the Chinese Patent Office on September 9, 2008 and entitled "METHOD, APPARATUS AND SYSTEM FOR RETURNING SIGNAL ERROR IN MULTI-CARRIER COMMUNICATION SYSTEM", which is incorporated herein by reference in its entirety.

### FIELD OF THE INVENTION

The present invention relates to the field of communication system technology, and in particular, to a method, apparatus and system for returning a signal error in a multi-carrier communication system.

### BACKGROUND OF THE INVENTION

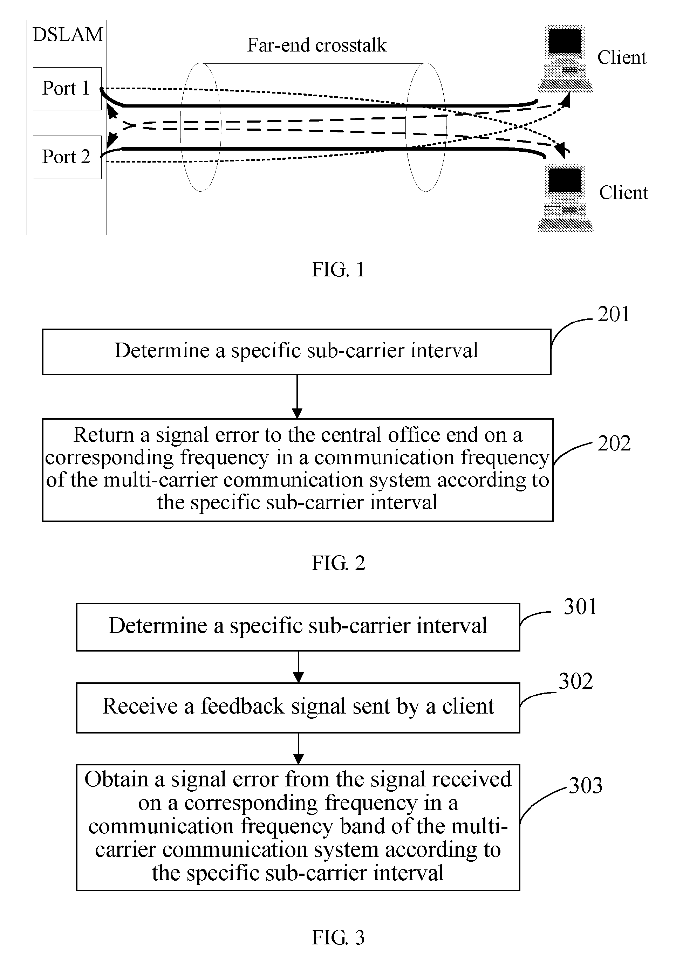

The digital subscriber line (xDSL) technology is a technology of high speed data transmission on an unshielded twist pair (UTP). With the improvement of the frequency band used by the xDSL technology, the problem of crosstalk, especially crosstalk of high frequency band, becomes increasingly distinct. When multiple users in a bundle of cables require activation of the xDSL service, some lines will have a low line rate and an unstable performance, and even cannot be activated due to a far-end crosstalk (FEXT), finally causing a low access rate of a DSL access multiplexer (DSLAM). As shown in FIG. 1, the FEXT is a situation where a signal sent by an apparatus at the central office end providing data transmission for one client produces signal interference on the other client.

Currently, a vectored-DSL technology is put forward by persons in the art, which mainly takes advantage of the DSLAM to carry out a joint reception and transmission at the central office end, and cancels the FEXT through a signal processing method. For uplink signals, signals sent by various clients converge on the DSLAM, and are received jointly by the DSLAM; for downlink signals, various signals are firstly preprocessed by the DSLAM and then sent jointly.

In the vectored-DSL technology, change of a signal error requires continuously monitoring, and then adjustments will be made to a sending filter in the joint transmission and a receiving filter in the joint reception according to the changed signal error, so as to adapt to the change of the signal error. When the receiving filter and the sending filter are adjusted properly, most crosstalk noises are cancelled, thus greatly raising the signal-to-noise ratio, and further greatly improving the channel capacity or the line rate.

When the signal error of the downlink channel is monitored, the sending filter of the downlink channel is at the central office end, and at the same time detection of the signal error is completed by the client, and thus the client is required to return the detected signal error to the central office end through the uplink channel, so that the central office end can adjust the sending filter.

During the implementation of the procedure of returning a signal error, the inventor finds that the prior art at least has the following problems.

In the prior art, an adoptable solution for returning a signal error is as follows. A current signal error is returned in each sub-carrier so that the central office end can adjust the sending filter in real time, which causes a large volume of required feedback data. The feedback channel used for returning the signal error, together with the uplink service channel, occupies the uplink bandwidth, and thus, the feedback channel has a limited capacity and cannot promptly return a large volume of data to the central office end, such that the central office end is unable to adjust the sending filter in real time.

### SUMMARY OF THE INVENTION

The present invention is directed to a method, apparatus and system for returning a signal error in a multi-carrier communication system, taking advantage of a limited feedback channel capacity, and promptly returning a signal error to a central office end.

To achieve the above objectives, the present invention adopts the following technical solutions.

A method for returning a signal error in a multi-carrier communication system is provided, where the method includes:
determining a specific sub-carrier interval, where the specific sub-carrier interval is larger than an interval between adjacent sub-carriers in the multi-carrier communication system; and
returning a signal error to a central office end on a corresponding frequency in a communication frequency band of the multi-carrier communication system at the specific sub-carrier intervals.

A method for returning a signal error in a multi-carrier communication system is provided, where the method includes:
determining a specific sub-carrier interval, where the specific sub-carrier interval is larger than an interval between adjacent sub-carriers in the multi-carrier communication system;
receiving a feedback signal sent by a client; and
obtaining a signal error from the signal received on a corresponding frequency in a communication frequency band of the multi-carrier communication system at the specific sub-carrier intervals.

A transmission device applicable to a multi-carrier communication system is provided, where the device includes:
a determining unit, adapted to determine a specific sub-carrier interval, where the specific sub-carrier interval is larger than an interval between adjacent sub-carriers in the multi-carrier communication system; and
a feedback unit, adapted to return a signal error to the central office end on a corresponding frequency in a communication frequency band of the multi-carrier communication system at the specific sub-carrier intervals.

A multi-carrier communication system is provided, where the multi-carrier communication system comprises a client and a central office end;
the client is adapted to return a signal error to the central office end on a corresponding frequency in a communication frequency band of the multi-carrier communication system at the specific sub-carrier intervals, and the specific interval is larger than an interval between adjacent sub-carriers in the multi-carrier communication system; and
the central office end is adapted to obtain a signal error from the signal received on the corresponding frequency in the communication frequency band of the multi-carrier communication system at the specific sub-carrier intervals.

In the method, apparatus and system for returning a signal error in a multi-carrier communication system according to the embodiments of the present invention, a specific sub-carrier interval is firstly determined, and then a signal error is returned according to the frequency of the specific sub-carrier interval. In this way, signal errors returned by the client to the central office end will be reduced greatly. For example, if the specific sub-carrier interval refers to an interval of ten sub-carriers, a signal error is returned by the client to the central office end every ten sub-carriers in the actual application, so that the central office end can adjust the sending filter according to the signal error, thereby improving the channel capacity and the line rate.

A signal error is returned according to a specific sub-carrier interval according to the embodiments of the present invention. And thus, compared with the prior art in which a signal error is returned in each sub-carrier, the embodiments of the present invention can reduce the volume of feedback data to the central office end, and not too much uplink bandwidth is occupied. In this way, the feedback channel is not blocked, such that a signal error can be promptly returned to the central office end in a limited feedback channel capacity.

### BRIEF DESCRIPTION OF THE DRAWINGS

To illustrate the technical solution according to the embodiments of the present invention or in the prior art more clearly, the accompanying drawings required for describing the embodiments or the prior art are introduced below briefly. Apparently, the accompanying drawings in the following descriptions merely show some of the embodiments of the present invention, and persons of ordinary skill in the art can obtain other drawings according to the accompanying drawings without creative efforts.
FIG. 1 is a schematic view of a far-end crosstalk in the prior art;
FIG. 2 is a flow chart of a feedback method according to a first embodiment of the present invention;
FIG. 3 is a flow chart of a method for a central office end to process a feedback according to the first embodiment of the present invention;
FIG. 4 is a block diagram of the client according to the first embodiment of the present invention;
FIG. 5 is a block diagram of the central office end according to the first embodiment of the present invention;
FIG. 6 is a flow chart of a feedback method for a client according to a second embodiment of the present invention;
FIG. 7 is a flow chart of a method for a central office end to process a feedback according to the second embodiment of the present invention;
FIG. 8 is a block diagram of the client according to the second embodiment of the present invention;
FIG. 9 is a block diagram of the central office end according to the second embodiment of the present invention;
FIG. 10 is a flow chart of a feedback method for a client according to a third embodiment of the present invention;
FIG. 11 is a flow chart of a method for a central office end to process a feedback according to the third embodiment of the present invention;
FIG. 12 is a block diagram of the client according to the third embodiment of the present invention; and
FIG. 13 is a block diagram of the central office end according to the third embodiment of the present invention.

### DETAILED DESCRIPTION OF THE EMBODIMENTS

A method, apparatus and system for returning a signal error in a multi-carrier communication system according to the embodiments of the present invention is hereinafter described in detail with reference to the accompanying drawings.

### Embodiment 1

In order to promptly return a signal error in a limited feedback channel capacity to a central office end, an embodiment of the present invention provides a method for returning a signal error. As shown in FIG. 2, the method includes the following steps.

In Step 201, it is necessary to firstly determine a specific sub-carrier interval. Generally, the specific sub-carrier interval can be determined in various modes. For example, the specific sub-carrier interval may be uniformly determined by an operator through a management information base (MIB) interface before the power-on of a line, or determined in the initialization process of a line according to specific situations, or determined in the normal operation process of a line according to specific situations.

In Step 202, after the specific sub-carrier interval is determined, a signal error is returned to the central office end on a corresponding frequency in a communication frequency band of the multi-carrier communication system at the specific sub-carrier intervals. For example, if the sub-carrier interval exactly corresponds to an interval time of ten sub-carriers, a signal error is returned to the central office end every ten sub-carriers in the communication frequency band of the multi-carrier communication system. Specifically, the signal error is carried on a corresponding frequency and returned to the central office end on the frequency every ten sub-carriers.

An embodiment of the present invention further provides a method for returning a signal error in a multi-carrier communication system. As shown in FIG. 3, the method includes the following steps.

In Step 301, as the method in FIG. 2, it is also necessary in the method to firstly determine a specific sub-carrier interval. Specifically, the specific sub-carrier interval may also be determined uniformly by an operator through an MIB interface before the power-on of a line, or determined in the initialization process of a line according to specific situations, or determined in the normal operation process of a line according to specific situations.

In Step 302, in order to adjust a sending filter to improve the channel capacity and the line rate, a feedback signal sent by a client is firstly received according to the embodiment.

In Step 303, after the feedback signal is received, a signal error is obtained from the signal received according to a frequency corresponding to the specific sub-carrier interval according to the embodiment of the present invention. For example, if the specific sub-carrier interval exactly corresponds to an interval frequency of ten sub-carriers, the central office end obtains a signal error from a corresponding sub-carrier every ten sub-carriers. After obtaining the signal errors, the central office end can calculate a corresponding channel parameter according to the signal errors, and then estimate, through interpolation estimation, corresponding channel parameters of other sub-carriers from the channel parameter corresponding to the sub-carrier returning a signal error, and adjust the sending filter accordingly.

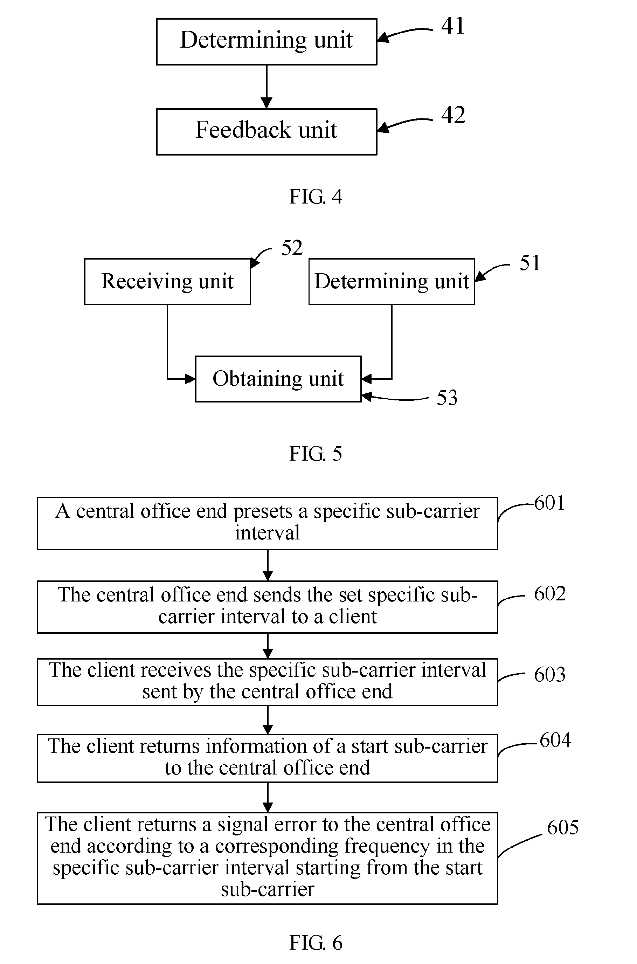

Corresponding to the method for returning a signal error described in FIG. 2, an embodiment of the present invention further provides a transmission device applicable to a multi-carrier communication system. As shown in FIG. 4, the transmission device applicable to a multi-carrier communication system includes a determining unit 41 and a feedback unit 42.

The determining unit 41 is adapted to determine a specific sub-carrier interval, and the specific sub-carrier interval may be determined uniformly by an operator through an MIB interface before the power-on of a line, or determined in the initialization process of a line according to specific situations, or determined in the normal operation process of a line according to specific situations. The feedback unit 42 is adapted to return a signal error to a client office end according to a frequency corresponding to the specific sub-carrier interval.

Corresponding to the method for returning a signal error described in FIG. 3, an embodiment of the present invention further provides a central office end. As shown in FIG. 5, the central office end includes a determining unit 51, a receiving unit 52, and an obtaining unit 53.

The determining unit 51 is adapted to determine a specific sub-carrier interval, which can be implemented in the same mode with that of the determining unit 41 in the client. The receiving unit 52 is adapted to receive a feedback signal sent by the client. The obtaining unit 53 is adapted to obtain a signal error from the signal received according to a frequency corresponding to the specific sub-carrier interval.

In the embodiment of the present invention, if the specific sub-carrier interval is set by the client, the client sends the specific sub-carrier interval and the signal error to the central office end at the same time, so as to reduce the frequency of communication between the client and the central office end, and reduce the occupied bandwidth.

In the embodiment of the present invention, the transmission device applicable to a multi-carrier communication system and the central office end may form a multi-carrier communication system. The transmission device applicable to a multi-carrier communication system is disposed on the client, and thus, the client in the system is adapted to return a signal error to the central office end on a corresponding frequency in a communication frequency band of the multi-carrier communication system at the specific sub-carrier intervals. The central office end in the system is adapted to obtain the signal error from the signal received on the corresponding frequency in the communication frequency band of the multi-carrier communication system at the specific sub-carrier intervals.

Corresponding to the method provided by the above embodiment, the specific sub-carrier interval in the system is larger than an interval between adjacent sub-carriers in the multi-carrier communication system.

In the method and apparatus for returning a signal error according to the embodiment of the present invention, a specific sub-carrier interval is set firstly, and then a signal error is returned according to the frequency corresponding to the specific sub-carrier interval. In this way, signal errors returned by the client to the central office end will be reduced greatly. For example, if the specific sub-carrier interval refers to an interval of ten sub-carriers, the client returns a signal error to the central office end every ten sub-carriers in the actual application, so that the central office end can adjust the sending filter according to the signal error, thereby improving the channel capacity and the line rate.

A signal error is returned according to a specific sub-carrier interval according to the embodiment of the present invention. And thus, compared with the prior art in which a signal error is returned in each sub-carrier, the embodiment of the present invention can reduce the volume of feedback data to the central office end, and not too much uplink bandwidth is occupied. In this way, the feedback channel is not blocked, such that a signal error can be promptly returned to the central office end in a limited feedback channel capacity.

### Embodiment 2

An embodiment of the present invention provides a method for returning a signal error in a multi-carrier communication system. As shown in FIG. 6, the method includes the following steps.

In Step 601, a central office end presets a specific sub-carrier interval, and the specific sub-carrier interval is larger than an interval between adjacent sub-carriers in the multi-carrier communication system. The specific sub-carrier interval may be numbers of interval sub-carriers. For example, the specific sub-carrier interval may be set as M, indicating a width of M sub-carriers (M is an integer larger than 1). The specific sub-carrier interval may also be a frequency width value of interval sub-carriers. For example, the specific sub-carrier interval may be set as M × Δf, where Δf indicates the frequency width value of adjacent sub-carriers in the multi-carrier communication system. The specific sub-carrier interval in the embodiment can be set in the following modes: set uniformly by an operator through an MIB interface before the power-on of a line, or set in the initialization process of a line according to specific situations, or set in the normal operation process of a line according to specific situations. Supposing the specific sub-carrier interval in the embodiment is set as an interval of ten sub-carriers.

In Step 602, the central office end sends the set specific sub-carrier interval to a client.

In Step 603, the client receives the specific sub-carrier interval sent by the central office end, and uses the received specific sub-carrier interval as a sub-carrier interval for returning a signal error.

In Step 604, the client returns information of a start sub-carrier to the central office end.

In Step 605, the client returns a signal error to the central office end according to a frequency corresponding to the specific sub-carrier interval starting from the start sub-carrier. As far as the embodiment is concerned, a signal error is returned to the central office end every ten sub-carriers, starting from the start sub-carrier.

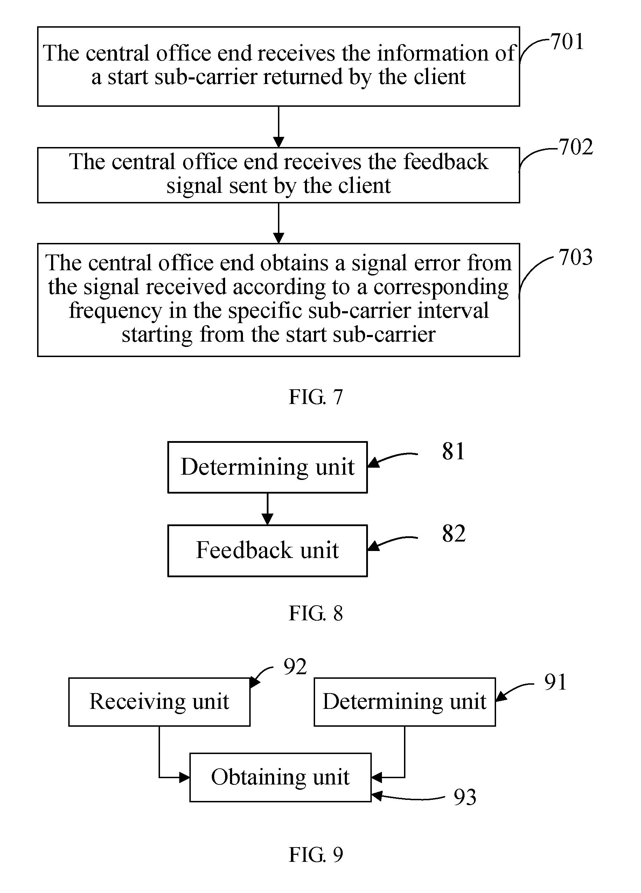

As shown in FIG. 7, the method for returning a signal error in the embodiment has the corresponding processing modes at the central office end. In FIG. 6, the central office end has already set the specific sub-carrier interval and sent the specific sub-carrier interval to the client, and thus, details are not repeated again here. The processing of the central office end includes the following steps.

In Step 701, the central office end receives the information of a start sub-carrier returned by the client.

In Step 702, the central office end receives the feedback signal sent by the client, and in the specific implementation, the central office end is required to receive the corresponding feedback signal from a feedback channel.

In Step 703, the central office end obtains a signal error from the signal received according to a frequency corresponding to the specific sub-carrier interval starting from the above start sub-carrier. As far as the embodiment is concerned, a signal error is obtained from the feedback information every ten sub-carriers, starting from the start sub-carrier.

After obtaining the signal error, the central office end calculates a corresponding channel parameter by using the signal error, and then estimates, through the interpolation estimation, corresponding channel parameters of other sub-carriers from the channel parameter corresponding to the sub-carrier returning a signal error, and accordingly adjusts the sending filter according to the channel parameters, thereby improving the channel capacity and the line rate.

Corresponding to the method for returning a signal error in FIG. 6, an embodiment of the present invention further provides a client. As shown in FIG. 8, the client includes a determining unit 81 and a feedback unit 82.

The determining unit 81 is adapted to determine a specific sub-carrier interval. The sub-carrier interval in the embodiment is set by the central office end, and thus the determining unit 81 in the embodiment determines a sub-carrier interval by receiving the specific sub-carrier interval sent by the central office end. The feedback unit 82 is adapted to return information of a start sub-carrier to the central office end. Starting from the start sub-carrier, the feedback unit 82 in the embodiment is adapted to return a signal error to the central office end according to a frequency corresponding to the specific sub-carrier interval.

Corresponding to the method in FIG. 7, an embodiment of the present invention further provides a central office end. As shown in FIG. 9, the central office end includes a determining unit 91, a receiving unit 92, and an obtaining unit 93.

The determining unit 91 is adapted to determine a specific sub-carrier interval. After the specific sub-carrier interval is determined, the central office end in the embodiment is further required to send the specific sub-carrier interval to the client. The receiving unit 92 is adapted to receive information of a start sub-carrier returned by the client, and the receiving unit 92 is further adapted to receive a feedback signal sent by the client. Starting from the start sub-carrier received by the receiving unit 92, the obtaining unit 93 obtains a signal error from the signal received according to a frequency corresponding to the specific sub-carrier interval.

In the embodiment, the client may send information of the start sub-carrier and the signal error to the central office end at the same time, so as to reduce the frequency of communication between the client and the central office end, and reduce the occupied bandwidth.

The specific sub-carrier interval in the embodiment is determined by the central office end for the convenience of a uniform management. A signal error is returned according to a specific sub-carrier interval according to the embodiments of the present invention. And thus, compared with the prior art in which a signal error is returned in each sub-carrier, the embodiments of the present invention can reduce the volume of feedback data to the central office end, and not too much uplink bandwidth is occupied. In this way, the feedback channel is not blocked, such that a signal error can be promptly returned to the central office end in a limited feedback channel capacity.

### Embodiment 3

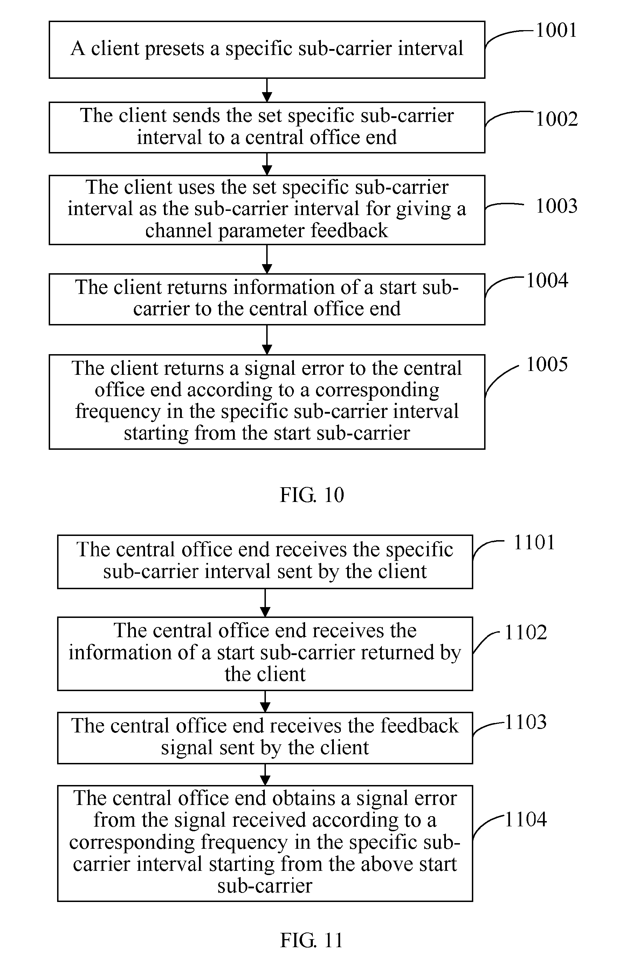

An embodiment of the present invention provides a method for returning a signal error. As shown in FIG. 10, the method for giving a feedback includes the following steps.

In Step 1001, a client presets a specific sub-carrier interval, and the specific sub-carrier interval is larger than an interval between adjacent sub-carriers in the multi-carrier communication system. For example, the specific sub-carrier interval is set as M, indicating a width of M sub-carriers (M is an integer larger than 1). Definitely, the specific sub-carrier interval may also be set as a value of M sub-carrier widths, for example, M × Δf, where Δf indicates a frequency width value of adjacent sub-carriers in the multi-carrier communication system. The specific sub-carrier interval in the embodiment can be set in the following modes: set uniformly by an operator through an MIB interface before the power-on of a line, or set in the initialization process of a line according to specific situations, or set in the normal operation process of a line according to specific situations. Supposing the specific sub-carrier interval in the embodiment is set as ten sub-carriers.

In Step 1002, the client sends the set specific sub-carrier interval to a central office end.

In Step 1003, the client uses the set specific interval as the sub-carrier interval for returning a signal error.

In Step 1004, the client returns information of a start sub-carrier to the central office end.

In Step 1005, the client returns a signal error to the central office end according to a frequency corresponding to the specific sub-carrier interval starting from the start sub-carrier. As far as the embodiment is concerned, a signal error is returned to the central office end every ten sub-carriers, starting from the start sub-carrier.

The method for returning a signal error in the embodiment has the corresponding processing modes at the central office end. As shown in FIG. 11, the processing of the central office end includes the following steps.

In Step 1101, the central office end receives the specific sub-carrier interval sent by the client.

In Step 1102, the central office end receives the information of a start sub-carrier returned by the client.

In Step 1103, the central office end receives the feedback signal sent by the client, and in the specific implementation, the central office end is required to receive the corresponding feedback signal from the feedback channel.

In Step 1104, staring from the start sub-carrier, the central office end obtains a signal error from the signal received on a corresponding frequency in a communication frequency band of a multi-carrier communication system at the specific sub-carrier intervals. As far as the embodiment is concerned, a signal error is obtained from the feedback information every ten sub-carriers, starting from the start sub-carrier.

After obtaining the signal error, the central office end calculates a corresponding channel parameter by using the signal error, and then estimates, through the interpolation estimation, corresponding channel parameters of other sub-carriers from the channel parameter corresponding to the sub-carrier returning a signal error, and accordingly adjusts the sending filter according to the channel parameters, thereby improving the channel capacity and the line rate.

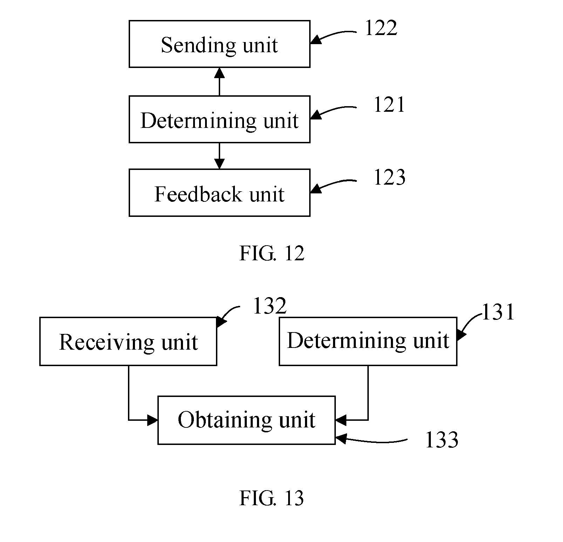

Corresponding to the method for returning a signal error in FIG. 10, an embodiment of the present invention further provides a client. As shown in FIG. 12, the client includes a determining unit 121, a sending unit 122, and a feedback unit 123.

The determining unit 121 is adapted to determine a specific sub-carrier interval. After the specific sub-carrier interval is determined, the specific sub-carrier interval is sent to the central office end by the sending unit 122. The feedback unit 123 is adapted to return information of a start sub-carrier to the central office end. Starting from the start sub-carrier, the feedback unit 123 in the embodiment is adapted to return a signal error to the central office end on a corresponding frequency in a communication frequency band of a multi-carrier communication system at the specific sub-carrier intervals.

Corresponding to the method in FIG. 11, an embodiment of the present invention further provides a central office end. As shown in FIG. 13, the central office end includes a determining unit 131, a receiving unit 132, and an obtaining unit 133.

The determining unit 131 is adapted to determine a specific sub-carrier interval. In the embodiment, the specific sub-carrier interval is determined by receiving the specific sub-carrier interval sent by a client. The receiving unit 132 is adapted to receive information of a start sub-carrier returned by the client, and the receiving unit 132 is further adapted to receive a feedback signal sent by the client. Starting from the start sub-carrier received by the receiving unit 132, the obtaining unit 133 obtains a signal error from the signal received on a corresponding frequency in a communication frequency band of a multi-carrier communication system at the specific sub-carrier intervals.

In the embodiment, the client may send information of the start sub-carrier, the specific sub-carrier interval and the signal error to the central office end at the same time, so as to reduce the frequency of communication between the client and the central office end, and reduce the occupied bandwidth.

In this embodiment, the specific sub-carrier interval is determined by the client, which is helpful for the client to determine a corresponding sub-carrier interval according to specific situations thereof, and helpful to realize dynamic changes of the sub-carrier interval. Meanwhile, a signal error is returned only at the specific sub-carrier intervals in the embodiment. And thus, compared with the prior art in which a signal error is returned in each sub-carrier, the embodiment of the present invention can reduce the volume of feedback data to the central office end, and not too much uplink bandwidth is occupied. In this way, the feedback channel is not blocked, such that a signal error can be promptly returned to the central office end in a limited feedback channel capacity.

Through the above description of the implementations, persons skilled in the art can clearly understand that the present invention may be accomplished through software plus a necessary universal hardware, or of course, through hardware. However, in many situations, the former is a better way of implementation. Based on this understanding, the technical solutions of the present invention essentially or the part contributing to the prior art may be embodied in the form of a software product. The computer software product may be stored in a readable storage medium, such as a floppy disk, a hard drive or a compact disk of a computer, and contain several instructions adapted to instruct a computer equipment (for example, a personal computer, a server, or network equipment) to perform the method according to the embodiments of the present invention.

The embodiments of the present invention relate to multi-carrier communication systems, where the multi-carrier communication systems include xDSL communication systems, or may be various wireless communication systems, such as mobile communication systems.

The above descriptions are merely specific embodiments of the present invention, but not intended to limit the protection scope of the present invention. Any variations or replacements that can be easily thought of by persons skilled in the technical art within the technical scope of the present invention should fall within the protection scope of the present invention. Therefore, the protection scope of the present invention is subject to the appended claims.

## Claims

1. A method for returning a signal error in a multi-carrier communication system, comprising:
determining a specific sub-carrier interval, wherein the specific sub-carrier interval is larger than an interval between adjacent sub-carriers in the multi-carrier communication system; and
returning a signal error to a central office end on a corresponding frequency in a communication frequency band of the multi-carrier communication system at the specific sub-carrier intervals.

2. The method for returning a signal error in a multi-carrier communication system according to claim 1, further comprising returning information of a start sub-carrier to the central office end,
wherein, the returning the signal error to the central office end on the corresponding frequency in the communication frequency band of the multi-carrier communication system at the specific sub-carrier intervals comprises: returning the signal error to the central office end on the corresponding frequency in the communication frequency band of the multi-carrier communication system at the specific sub-carrier intervals starting from the start sub-carrier.

3. The method for returning a signal error in a multi-carrier communication system according to claim 1 or 2, wherein the specific sub-carrier interval is set by the central office end, the determining the specific sub-carrier interval comprises receiving the specific sub-carrier interval sent by the central office end.

4. The method for returning a signal error in a multi-carrier communication system according to claim 1 or 2, wherein the specific sub-carrier interval is set by a client, and the method further comprises:
sending the specific sub-carrier interval to the central office end.

5. The method for returning a signal error in a multi-carrier communication system according to claim 4, wherein the specific sub-carrier interval and the signal error are sent to the central office end at the same time.

6. The method for returning a signal error in a multi-carrier communication system according to claim 2, wherein when the specific sub-carrier interval is set by the client, information of the start sub-carrier, the specific sub-carrier interval, and the signal error are sent to the central office end at the same time.

7. A method for returning a signal error in a multi-carrier communication system, comprising:
determining a specific sub-carrier interval, wherein the specific sub-carrier interval is larger than an interval between adjacent sub-carriers in the multi-carrier communication system;
receiving a feedback signal sent by a client; and
obtaining a signal error from the signal received on a corresponding frequency in a communication frequency band of the multi-carrier communication system at the specific sub-carrier intervals.

8. The method for returning a signal error in a multi-carrier communication system according to claim 7, further comprising:
receiving information of a start sub-carrier returned by the client,
wherein, the obtaining the signal error from the received signal on the corresponding frequency in the communication frequency band of the multi-carrier communication system at the specific sub-carrier intervals comprises: obtaining the signal error on the corresponding frequency in the communication frequency band of the multi-carrier communication system at the specific sub-carrier intervals starting from the start sub-carrier.

9. A transmission device applicable to a multi-carrier communication system, comprising:
a determining unit, adapted to determine a specific sub-carrier interval, wherein the specific sub-carrier interval is larger than an interval between adjacent sub-carriers in the multi-carrier communication system; and
a feedback unit, adapted to return a signal error to a central office end on a corresponding frequency in a communication frequency band of a multi-carrier communication system at the specific sub-carrier intervals.

10. The transmission device applicable to a multi-carrier communication system according to claim 9, wherein the feedback unit is further adapted to return information of a start sub-carrier to the central office end, and the feedback unit returns the signal error to the central office end on the corresponding frequency in the communication frequency band of the multi-carrier communication system at the specific sub-carrier intervals starting from the start sub-carrier.

11. The transmission device applicable to a multi-carrier communication system according to claim 9, wherein the specific sub-carrier interval is set by a client, the client further comprises:
a sending unit, adapted to send the specific sub-carrier interval to the central office end.

12. The transmission device applicable to a multi-carrier communication system according to claim 9, wherein the specific sub-carrier interval is set by the central office end; and the determining unit determines the specific sub-carrier interval by receiving the specific sub-carrier interval sent by the central office end.

13. A central office end, comprising:
a determining unit, adapted to determine a specific sub-carrier interval, wherein the specific sub-carrier interval is larger than an interval between adjacent sub-carriers in a multi-carrier communication system;
a receiving unit, adapted to receive a feedback signal sent by a client; and
an obtaining unit, adapted to obtain a signal error from the signal received on a corresponding frequency in a communication frequency band of the multi-carrier communication system at the specific sub-carrier intervals.

14. The central office end according to claim 13, wherein the receiving unit is further adapted to receive information of a start sub-carrier returned by a client, and the obtaining unit obtains the signal error from the signal received on the corresponding frequency in the communication frequency band of the multi-carrier communication system at the specific sub-carrier intervals starting from the start sub-carrier.

15. A multi-carrier communication system, **characterized in that** the multi-carrier communication system comprises a client and a central office end,
the client is adapted to return a signal error to the central office end on a corresponding frequency in a communication frequency band of the multi-carrier communication system according to a specific sub-carrier interval, and the specific interval is larger than an interval between adjacent sub-carriers in the multi-carrier communication system; and
the central office end is adapted to obtain a signal error from the signal received on the corresponding frequency in the communication frequency band of the multi-carrier communication system at the specific sub-carrier intervals.
